# EUROPEAN PATENT APPLICATION

(11) **EP 2 328 309 A1**
(43) Date of publication of application: **01.06.2011**
(21) Application number: 09812642.8
(22) Date of filing: 01.09.2009
(51) Int. Cl.: H04L 12/58

(54) **METHOD, DEVICE AND SYSTEM FOR CONTENT FILTERING**

(30) Priority: 10.09.2008 CN 200810216224
(71) Applicant: Huawei Technologies Co., Ltd., Longgang District, Shenzhen Guangdong 518129 (CN)
(72) Inventor: LIU, Yiling, Shenzhen Guangdong 518129 (CN); ZUIDWEG, Johan, Shenzhen Guangdong 518129 (CN)
(74) Representative: Pfenning, Meinig & Partner GbR
(86) International application number: PCT/CN2009/073666
(87) International publication number: WO 2010/028576

(57) **Abstract**

A content screening method, apparatus, and system, and a content source are provided. The content screening method includes: determining that an opinion on content needs to be sought from an administrator according to a Screening Rule or a processing mode of a content screening apparatus; obtaining contact method information of the administrator; sending a message for seeking an opinion to the administrator according to the contact method information of the administrator, where the opinion is about how to screen the content; receiving a message which is sent by the administrator and carries the opinion of the administrator; and screening the content according to the opinion of the administrator. With the method and apparatus, content can be flexibly screened on the network side according to an opinion of an administrator to meet the user's requirement for personalized screening of the content on the network side.

## Description

This application claims priority to Chinese Patent Application No. 200810216224.0, filed with the Chinese Patent Office on September 10, 2008 and entitled "Content Screening Method, Apparatus, and System", which is incorporated herein by reference in its entirety.

### FIELD OF THE INVENTION

The present invention relates to a communication technology and a computer technology, and in particular, to a content screening technology.

### BACKGROUND OF THE INVENTION

With the rapid development of network technologies and various information technologies, the range of content available to a user breaks through the limitation of time and space. The user is likely to face unhealthy content or content that threatens a client. Therefore, the requirements for screening communication content become intense increasingly. Screening technologies include list-based screening technologies, keyword-based screening technologies, template-based screening technologies, and categorization-based screening technologies. Categorization-based screening technologies are a hotspot of research owing to their flexibility and wide applicability.

For example, firewall software and anti-virus software used on computers can detect suspicious actions in modifying files, executing files or downloading files and remind users, and provide multiple screening options for users.

The foregoing software is used on the terminal side, and it is convenient to obtain a user's opinion and execute a corresponding action according to the user's opinion. The network side, however, cannot remind users directly, and thus the foregoing technology cannot be used for screening content on the network side.

### SUMMARY OF THE INVENTION

To enable more flexible content screening, embodiments of the present invention provide, from different viewpoints, a content screening method, and an apparatus and a system for using this method.

A content screening method includes: determining, according to a Screening Rule or a processing mode of a content screening apparatus, that an opinion needs to be sought from an administrator of the content; obtaining contact method information of the administrator; sending, according to the contact method information of the administrator, a message for seeking an opinion, to the administrator, where the opinion is about how to screen the content; receiving a message which is sent by the administrator and carries the opinion of the administrator; and screening the content according to the opinion of the administrator.

A content screening apparatus, where content screening apparatus is applied in a callable mode or a proxy mode, and the content screening apparatus includes: a determining module, configured to: when the content screening apparatus is triggered to screen content, determine, according to a Screening Rule or a processing mode of the content screening apparatus, whether to seek an opinion from an administrator, and trigger a first consulting module if an opinion needs to be sought from the administrator; a contact method information obtaining module, configured to obtain contact method information of the administrator; the first consulting module, configured to seek, according to the contact method information of the administrator, an opinion from the administrator, when the determining module determines that an opinion needs to be sought from the administrator, and receive a message which is sent by the administrator and carries the opinion of the administrator; and a first screening module, configured to screen, according to the received opinion of the administrator, the content.

Another content screening apparatus, where the content screening apparatus is applied in a callable mode and includes: a determining module, configured to, when the content screening apparatus receives a content screening request sent by a content source, determine, according to a Screening Rule or a processing mode of the content screening apparatus, whether to seek an opinion from an administrator, and trigger a second consulting module if an opinion needs to be sought from the administrator; and the second consulting module, configured to send, a message for seeking an opinion from the administrator, to the content source, when the determining module determines that an opinion needs to be sought from the administrator, so as to enable the content source to seek an opinion from the administrator and to screen content according to the opinion of the administrator.

A content source, where the content source communicates with the foregoing content screening apparatus that adopts a callable mode, and the content source includes: a receiving module, configured to receive a message, which is sent by the content screening apparatus and is for seeking an opinion from an administrator; a third consulting module, configured to seek an opinion from the administrator, and receive a message which is sent by the administrator and carries the opinion of the administrator; and a second screening module, configured to screen content according to the received opinion of the administrator.

A content screening system, where the system includes a content screening apparatus and a content source. The content screening apparatus adopts a callable mode and is configured to: after receiving a content screening request sent by the content source, determine, according to a Screening Rule or a processing mode of the content screening apparatus, that an opinion needs to be sought from an administrator, send a message, for seeking an opinion, to the administrator, receive the opinion returned by the administrator, screen content according to the opinion, and send a content screening result to the content source. The content source is configured to: cooperate with the content screening apparatus that adopts a callable mode, send the content screening request to the content screening apparatus, receive the content screening result sent by the content screening apparatus, perform processing according to the screening result, and send the processing result to a content receiver.

Another content screening system, where the system includes a content screening apparatus and a content source. The content screening apparatus adopts a proxy mode and is configured to: after intercepting content sent from a content source to a content receiver, determine, according to a Screening Rule or a processing mode of the content screening apparatus, that an opinion needs to be sought from an administrator, send a message, for seeking an opinion, to the administrator, receive the opinion returned by the administrator, screen the content according to the opinion, and send a content screening result to the content receiver. The content source is configured to cooperate with the content screening apparatus that adopts a proxy mode and send content to the content receiver.

Another content screening system includes a content screening apparatus and a content source. The content screening apparatus adopts a callable mode and is configured to: after receiving a content screening request sent by the content source, determine, according to a Screening Rule or a processing mode of the content screening apparatus, that an opinion needs to be sought from an administrator, and notify the content source that an opinion needs to be sought from the administrator. The content source is configured to obtain the opinion from the administrator, screen content according to the opinion of the administrator, and send the content obtained after processing to a content receiver.

With the foregoing content screening method, apparatus, and system, an opinion is sought from an administrator so that content can be screened on the network side according to the opinion of the administrator to improve the flexibility and meet the user's requirement for personalized screening of the content on the network side.

### BRIEF DESCRIPTION OF THE DRAWINGS

The drawings herein are provided for better understanding of the present invention, and they constitute a part of the application. The drawings should not be understood as limitations to the invention. In the accompanying drawings:
FIG 1 is a schematic diagram showing a flowchart of a content screening method;
FIG 2 is a schematic diagram showing a callable mode of a content screening apparatus and a proxy mode of a content screening apparatus;
FIG 3a is a schematic diagram showing a network of a content screening system that uses the method shown in FIG 1;
FIG 3b is a schematic diagram showing a network of another content screening system;
FIG. 4 is a schematic diagram showing a flowchart of a content screening method;
FIG. 5 is a flowchart of a content screening method according to another embodiment of the present invention;
FIG. 6 is a flowchart of a content screening method according to another specific embodiment of the present invention;
FIG. 7a shows an application scenario of content screening performed by a content screening apparatus which is in a proxy mode;
FIG. 7b is a flowchart of a content screening method in the application scenario shown in FIG. 7a;
FIG. 8 shows an application scenario of content screening performed by a content screening apparatus which is in a callable mode;
FIG. 9a is a schematic diagram showing a structure of a content screening apparatus;
FIG. 9b is a schematic diagram showing a structure of another content screening apparatus;
FIG. 10a is a schematic diagram showing a structure of a content screening apparatus;
FIG. 10b is a schematic diagram showing a structure of another content screening apparatus;
FIG. 10c is a schematic diagram showing a structure of another content screening apparatus;
FIG 11a is a schematic diagram showing a structure of a content source;
FIG 11b is a schematic diagram showing a structure of a content source; and
FIG. 11c is a schematic diagram showing a structure of another content source.

### DETAILED DESCRIPTION OF THE EMBODIMENTS

In the network or network environment mentioned in the following embodiments of the present invention, two or more devices are connected to each other. These devices can communicate with each other or exchange data. Devices in the network environment (hereinafter referred to as network devices) may be located in a unified public area or located in different geographic locations. The network herein may adopt any data communication protocol and any type of data communication medium. Similarly, the network device herein may be any device or system included in a network, and may also be referred to as a network node. For example, a network device may be any type of computer system, storage system, bridge, router, switch, network integrator, or network server, or analog thereof.

In the following embodiments of the present invention, a network device, which is relative to a terminal device used by a user, especially refers to a device which is in a network and cannot directly interact with a user. A content screening apparatus is a network device that can screen content, and is different from a terminal device that can directly interact with a user, such as a mobile phone or a personal computer (PC).

In the following embodiments of the present invention, an administrator is a device or a user that has a certain management function or right for services. For example, an administrator may be a service subscriber, another individual, another management apparatus, or a service provisioning apparatus. The administrator may be set and associated during service subscription. Said another management apparatus or service provisioning apparatus may be a virus judgment system, a junk information judgment system, or a manual check system. Specially, if a service user is the same as a service subscriber, an opinion needs to be sought from the service user him/herself.

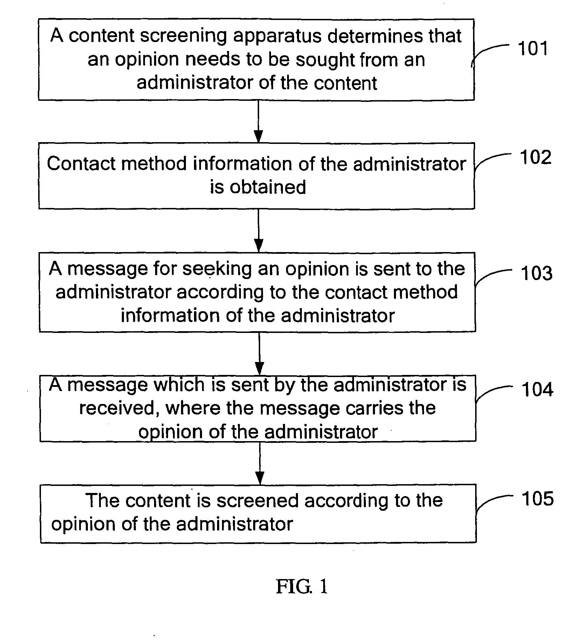

Referring to FIG 1, FIG. 1 is a schematic diagram showing a flowchart of a content screening method. The content screening method according to an embodiment includes the following steps:
Step 101: A content screening apparatus determines, according to a Screening Rule of a content receiver or a processing mode of the content screening apparatus, that an opinion needs to be sought from an administrator of the content.
Step 102: Contact method information of the administrator is obtained.
Step 103: A message for seeking an opinion is sent to the administrator according to the contact method information of the administrator, where the opinion is about how to screen the content.
Step 104: A message, which is sent by the administrator and carries the opinion of the administrator, is received.
Step 105: The content is screened according to the opinion of the administrator.

With this method, content can be flexibly screened on the network side according to the opinion of the administrator to meet the user's requirement for personalized screening of the content on the network side.

The following describes a usual working principle of a network system that uses the foregoing method.

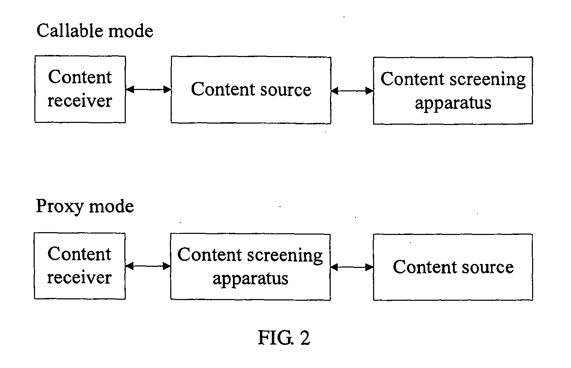

Generally, a content screening apparatus may adopt two modes, namely, a callable mode and a proxy mode. Referring to FIG. 2, FIG 2 is a schematic diagram showing a callable mode of a content screening apparatus and a proxy mode of a content screening apparatus. In the callable mode, a content source sends content to a content screening apparatus for screening content; after screening the content, the content screening apparatus returns a screening result to the content source; the content source sends the content retained after screening or a rejection indication to a content receiver (such as a user).

It should be noted that, the screening result returned by the content screening apparatus may be a content processing policy. According to the processing policy, the content source performs further processing, and then returns the processing result to the content receiver. For example, the screening result is "adjustment". The content source is instructed to adjust the content according to a given adjustment policy and send the content obtained after adjustment to the content receiver. For another example, the screening result is "warning". The content source is instructed to add a piece of warning information into the content when sending the content to the content receiver. The screening result returned by the content screening apparatus may also be a processing result that can be directly sent to the content receiver, and the content source needs to only send the result to the content receiver. The common feature of the two methods is as follows: Content is sent by the content source finally. The content screening apparatus cannot ensure that the content source complies with the returned screening result. That is, the content screening apparatus is not completely certain about the specific content sent to the content receiver.

In the proxy mode, the content screening apparatus is located between a content source and a content receiver and screens the content exchanged between the content receiver and the content source. Different from the foregoing callable mode, the proxy mode allows the content screening apparatus to directly screen content and then send the content obtained after processing to the content receiver.

Obviously, in the callable mode, content is finally sent from the content source to the content receiver, and the screening result of the content screening apparatus is not mandatory; in the proxy mode, the screening of the content screening apparatus is mandatory, and the content finally received by the content receiver is determined by the content screening apparatus.

The content source is not necessarily a content provisioning server for storing content and providing content for a content receiver. The content source is a broad-sense and a relative concept. For example, in the short message service (SMS), a short message service center (SMSC) can function as a content source to call a content screening server for screening. During network access of a mobile phone, a packet data servicing node (PDSN) on a core network (CN), which is a data service processing apparatus, can function as a content source to call a content screening server for screening. The content screening apparatus (e.g., the content screening server) can be deployed in the proxy mode in a transmission path from the actual content server to the PDSN for screening.

In specific scenarios, the content source is also known as a content provider or a content screening requestor.

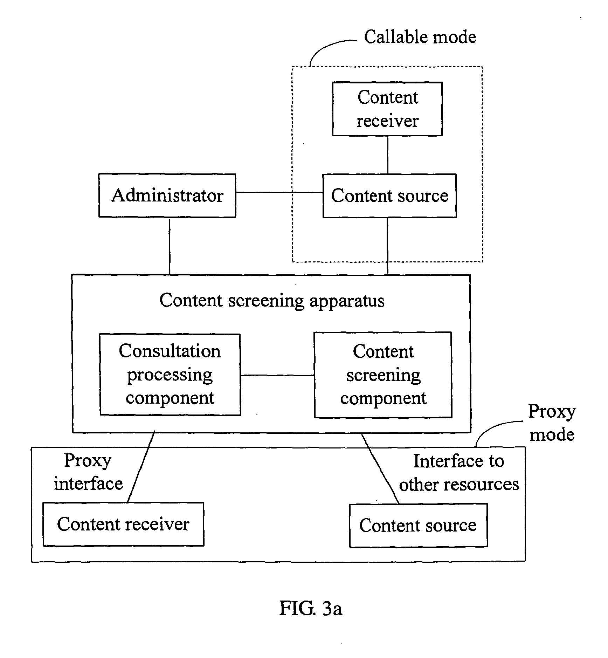

FIG. 3a is a schematic diagram showing a network of a content screening system that uses the method shown in FIG. 1. The callable mode and the proxy mode are indicated in FIG. 3a. Generally, a system adopted in real applications can support one of the two modes.

The content screening apparatus is a logical concept. The content screening apparatus can be integrated into other devices physically. It may be a standalone server or a system consisting of different modules.

The content screening apparatus may include a content screening component and a consultation processing component. It should be noted that the functional modules of the content screening apparatus may be divided in other ways without affecting the implementation of the functions.

Different workflows of the content screening apparatus in different modes are as follows:

In the callable mode, different solutions may be adopted. One solution includes steps 301a-304a.
Step 301a: When receiving a content screening request from a content source, the content screening apparatus finds, according to a Screening Rule or a processing mode of the content screening apparatus, that an opinion needs to be sought from an administrator.
Step 302a: The content screening apparatus obtains an opinion from the administrator (for example, by sending a message for seeking an opinion) and returns the opinion of the administrator to the content screening component. Specifically, the content screening apparatus may further be configured to obtain contact method information of the administrator and obtain reachablility of the contact methods after the contact method information of the administrator is obtained.
Step 303a: The content screening apparatus performs screening according to the opinion of the administrator and returns a screening result to the content source.
Step 304a: The content source performs processing according to the screening result and sends the content obtained after processing to a content receiver.

Another solution in the callable mode includes steps 301b-303b.
Step 301b: When receiving a content screening request from a content source, the content screening apparatus determines (or finds), according to a Screening Rule or a processing mode of the content screening apparatus, that an opinion needs to be sought from an administrator.
Step 302b: When determining that an opinion needs to be sought from the administrator, the content screening apparatus notifies the content source that an opinion needs to be sought from the administrator.
Step 303b: The content source obtains an opinion from the administrator, performs processing according to the opinion of the administrator, and sends the content obtained after processing to a content receiver.

The content screening apparatus may further obtain contact method information of the administrator and reachablility of the contact methods, and sends the obtained information to the content source when notifying the content source that an opinion needs to be sought from the administrator. Alternatively, the content source itself may obtain contact method information of the administrator and reachablility of the contact methods. Specifically, there are the following five cases:
Case 1: The content screening apparatus obtains contact method information of the administrator, notifies the content source that an opinion needs to be sought from the administrator, and feeds back the contact method information of the administrator and information to be provided for the administrator to the content source; or
Case 2: The content screening apparatus obtains contact method information of the administrator, notifies the content source that an opinion needs to be sought from the administrator, and feeds back the contact method information of the administrator and information to be provided for the administrator to the content source, and the content source obtains reachablility of the contact methods; or
Case 3: The content screening apparatus obtains contact method information of the administrator and reachablility of the contact methods, notifies the content source that an opinion needs to be sought from the administrator, and feeds back the contact method information of the administrator, reachablility of the contact methods, and information to be provided for the administrator, to the content source; or
Case 4: The content screening apparatus notifies the content source that an opinion needs to be sought from the administrator and feeds back information to be provided for the administrator, to the content source, and the content source obtains contact method information of the administrator; or
Case 5: The content screening apparatus notifies the content source that an opinion needs to be sought from the administrator, and feeds back information to be provided for the administrator, to the content source, and the content source obtains contact method information of the administrator and reachablility of the contact methods.

The solution of steps 301b-303b is different from the solution of steps 301a-304a in that the content source seeks an opinion from the administrator.

In the proxy mode, the following solution may be adopted, where the solution includes steps 301c-303c:
Step 301c: When screening content exchanged between a content receiver and a content source through a proxy interface and an interface to other resources (that is, when intercepting content exchanged between the content receiver and the content source), a content screening apparatus determines whether an opinion needs to be sought from an administrator. Specifically, if an opinion needs to be sought from the administrator, a consultation processing component may be triggered.
Step 302c: When determining that an opinion needs to be sought from the administrator, the content screening apparatus sends a message for seeking an opinion to the administrator and receives the opinion returned by the administrator.

Specifically, the consultation processing component may further be configured to obtain contact method information of the administrator and obtain reachablility of the contact methods after the contact method information of the administrator is obtained.
Step 303c: The content screening apparatus screens the content according to the opinion of the administrator and sends the content obtained after screening or a rejection indication to a content receiver.

It can be seen that, the solution of steps 301c-303c in the proxy mode is essentially consistent with the solution of steps 301a-304a in the callable mode. That is, the content screening apparatus consults the administrator. The only difference is the adopted mode of the content screening apparatus.

The foregoing system may be used to execute the following methods or flows. The working principle is consistent with or similar to the description of the following methods.

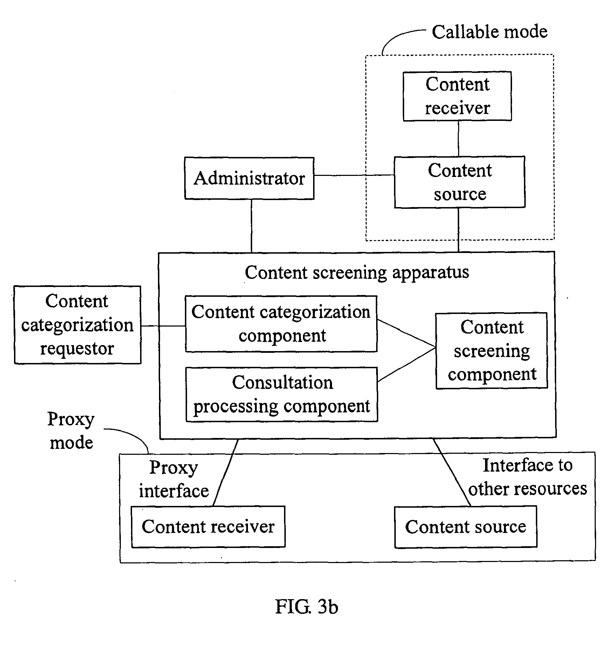

Referring to FIG. 3b, FIG. 3b is a schematic diagram showing a network of a content screening system. Different from FIG. 3a, the content screening apparatus in FIG. 3b can perform categorization-based content screening. In this case, the content screening apparatus is also referred to as a Categorization-Based Content Screening Framework or a Categorization-Based Content Screening Server (CBCSS). The content screening apparatus may further include a Content Categorization Component. The Content Categorization Component may be configured to perform content categorization or provide content category information. The Content Categorization Component may provide a CBCS-1 interface, through which a content screening component and an external Content Categorization Requestor may obtain, from the Content Categorization Component, category information of a specific content or specific contents.

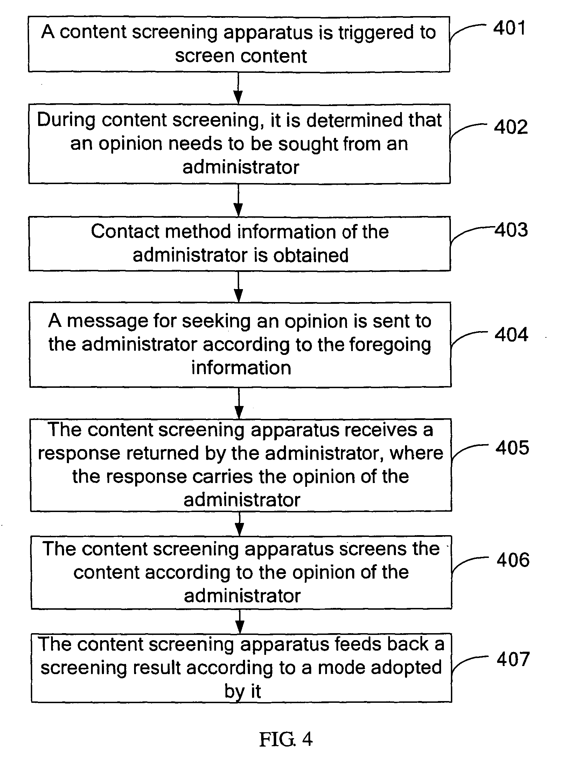

Referring to FIG 4, FIG 4 is a schematic diagram showing a flowchart of a content screening method. The content screening method shown in FIG4 includes the following steps:
Step 401: A content screening apparatus is triggered to screen content.

For example, the content screening apparatus receives a content screening request from a content source (in the callable mode or the proxy mode) or the content screening apparatus intercepts interactive data to be screened (in the proxy mode). The content screening request or the interactive data includes user information, content to be screened, and other related information. Specifically, the content to be screened may be the content itself or a content reference; said other related information includes pre-categorization information corresponding to the content.
Step 402: The content screening apparatus determines that an opinion on the content needs to be sought from an administrator.

Specifically, the step of determining that an opinion on the content needs to be sought from the administrator may be determined according to a Screening Rule or a processing method of the content screening apparatus.

The Screening Rule means a policy or method for executing an action for the content (such as blocking or screening out, modification), the rule may be construed as "executing B when A". The Screening Rule may be public or private. The former is set by an administrator of a system or a screening apparatus according to the requirement of a public organization, a government, or a society (For example, all erotological content needs to be blocked for children that are younger than 16 years old). The latter is subscribed to by a user or a group administrator for a user or a group. Examples of the Screening Rule for seeking an opinion from an administrator are as follows: When a sender of a short message is out of the contact list of a user, an opinion needs to be sought from the user; when the content is a movie, an opinion needs to be sought from a subscriber (e.g., the users' parents). For another example, the Screening Rule is that when certain words are obtained during a keyword scanning, an opinion needs to be sought from an administrator.

A processing method of the content screening apparatus means the working characteristic of the content screening apparatus, including a working condition and a working mode, etc. For example, when a category cannot be obtained, an opinion needs to be sought from an administrator. Specifically, the content screening apparatus screens content according to the category of content (or content categorization). The foregoing content screening request does not provide category information about the content, and the content is uncategorized. In addition, the content screening apparatus cannot obtain category information externally or fails to obtain category information. The content screening apparatus cannot screen content according to content categorization. Therefore, an opinion needs to be sought from an administrator.

Optionally, a Screening Rule may include contact method information of an administrator. For example, the Screening Rule is as follows: When content includes keyword A, B, or C, an opinion is sought from an administrator (e.g., a mobile phone number: xxx).

Step 403: The content screening apparatus obtains contact method information of the administrator.

Specifically, when step 402 involves contact method information of the administrator, contact method information of the administrator can be obtained according to the Screening Rule described in step 402. This step only needs to parse out the contact method information. In other cases, the content screening apparatus may request contact method information of the administrator from other devices and receive the contact method information of the administrator returned by said other devices.

For example, when the administrator is a service subscriber, the content screening apparatus may request, from a system (subscription system) that stores subscription information, contact method information of the service subscriber, and receive the contact method information of the service subscriber.

For example, when the administrator is a service subscriber, the content screening apparatus may request service subscriber information of the service user from a system (subscription system) that stores subscription information, and receive the information of the service subscriber. The information of the service subscriber includes contact method information of the service subscriber. The system that stores subscription information may be a General Service Subscription Management (GSSM) apparatus.

For another example, when the administrator is a service subscriber, and the service subscriber cannot be contacted according to information of the service subscriber provided by a subscription system, the content screening apparatus needs to further request, according to the received information of the service subscriber, contact method information of the service subscriber, from an apparatus that stores contact method information. The apparatus that stores contact method information may be a General User Profile (GUP), a Common User Profile (CUP), or a Business and Operation Support System (BOSS).

In the foregoing examples, a specific situation of failing to use information of a service subscriber to contact the service subscriber is as follows: The subscription system provides only a unified user identity of the service subscriber in the subscription system, but the unified user identity cannot be used to determine a service through which a user is contacted, or determine the specific service contact method information of the user. The service may be an SMS, an instant message (IM) notification service, or an email service. The specific service contact method information of the user may be a mobile phone number, an International Mobile Subscriber Identification number (IMSI), an Electronic Serial Number (ESN), an IM account, or an email address.

In one example, the administrator is an individual (namely, a user), and contact method information of the user can be requested from an apparatus (such as a GUP) that stores the contact method information of the administrator.

In another example, the administrator is a management apparatus or a service provisioning apparatus, and the content screening apparatus may request address information of the administrator from an apparatus that stores the address information of the administrator. In addition, the content screening apparatus may obtain contact method information such as security authentication information, an account, and its password.

Step 404: The content screening apparatus sends, according to the obtained contact method information of the administrator, a message for seeking an opinion, to the administrator.

Specifically, the content screening apparatus may selectively use one or more contact methods of the administrator for one or more times or unselectively use all contact methods for one or more times to send a message for seeking an opinion, to the administrator.

If the administrator has more than one contact method, the content screening apparatus may select one or more contact methods from multiple contact methods of the administrator according to a simplicity-preference principle. The simplicity-preference principle indicates preferential selection of a contact method through which a user feedback can be obtained fastest or relatively faster. "Obtaining fastest or relatively faster" can be determined according to specific implementation and experience. For example, according to popularity of mobile phones and SMS usage habits, it is determined that the SMS is a contact method faster than the IM notification, and that the SMS is a relatively fastest contact method.

Specifically, the message for seeking an opinion may include information to be provided for the administrator, such as information serving as a judgment basis. Specifically, the message for seeking an opinion includes at least selection information, user information, and requested content information to be provided for the administrator.

In addition, the message for seeking an opinion may further include one or any combination of the following: time, content sender, category, and cause of sending the request.

The time is the approximate time when a user requests content and is provided for the administrator. The time may be the time of generating a message for seeking an opinion and the time of determining that an opinion needs to be sought.

The cause of sending the request may be, for example, that an opinion should be sought from the administrator in the following case according to a Screening Rule: Content includes keywords A, B, and C specified by the user, or the content category is eroticism.
Step 405: The content screening apparatus receives a message (for example, a valid response) returned by the administrator, where the message carries an opinion of the administrator.
Step 406: The content screening apparatus screens the content according to the opinion of the administrator.

For example, when the opinion of the administrator is to permit the content to pass, the content screening apparatus permits the content to pass; when the opinion of the administrator is to add warning information, the content screening apparatus adds warning information; when the opinion of the administrator is to block the content, the content screening apparatus blocks the content.

For another example, if the content screening request in step 401 carries a screening mode indication, the screening of the content according to the opinion of the administrator needs to meet the requirements of the screening mode indication.

For another example, the content screening apparatus receives multiple messages or responses. If opinions of the administrator in these messages are different, the content screening apparatus performs processing according to a certain processing policy. The processing policy may be as follows: blocking the content as long as one of the opinions indicates blocking; or seeking an opinion from the administrator again.

It should be noted that, a valid response may not be obtained from the administrator in steps 405-406. In this case, the content screening apparatus may execute an action according to its rule and/or a Screening Rule of a content receiver (for example, a user). The Screening Rule of the content receiver is an applicable Screening Rule. The Screening Rule may be private and may also be public. For example, according to the Screening Rule of the user, the content screening apparatus may remind the user to wait and try to contact the administrator later. If the content screening apparatus does not support this mode, the content screening apparatus may screen the content according to its own rule. Its own rule may be, for example, that the content screening apparatus blocks the content by default and notifies a content receiver.
Step 407: The content screening apparatus feeds back a screening result.

The processes of feeding back screening results by the content screening apparatus vary with the adopted modes.

For example, in the callable mode, the content screening apparatus feeds back a screening result to a content source.

For another example, in the proxy mode, the content screening apparatus sends processed data to a next-level apparatus, namely, a content receiver.

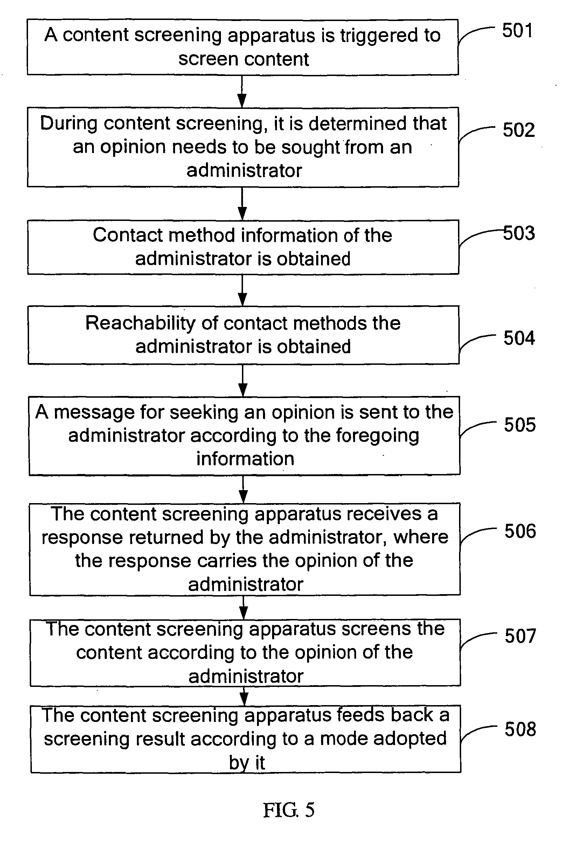

FIG. 5 shows a flowchart of a content screening method according to another embodiment of the present invention. Different from the embodiment shown in FIG. 4, the embodiment shown in FIG. 5 adds a step of obtaining reachablility of contact methods of an administrator. The content screening method includes the following steps:
Steps 501-503 are the same as steps 401-403 and are not described here.

After step 503, this method further includes step 504: The content screening apparatus may further obtain reachablility of the contact methods of the administrator.

Specifically, if the administrator is an individual, such as a service subscriber or another individual (i.e., a person who is not a subscriber, which can be specified in a Screening Rule), due to uncertainty of a user state, obtaining reachablility of contact methods on the network side can efficiently prevent a delay caused by an unreachable contact method, improve the success rate of seeking an opinion, and shorten the consumed time. For example, if all kinds of contact methods are unreachable, the workflow when failing to obtain a valid response may be executed directly, or the content screening apparatus selectively or unselectively sends, according to contact method information of the administrator, a message for seeking an opinion, to the administrator. For another example, if the contact method information includes a mobile phone number and an IM address, the content screening apparatus can judge reachablility of the contact methods and select a reachable contact method to seek an opinion. The content screening apparatus can determine that the administrator is an individual according to a type (such as the user ID, mobile phone number, IM address, or email address) of a contact method of the administrator or setting of a Screening Rule (e.g., if the administrator is a subscriber, the subscriber is an individual).

When the administrator is another management apparatus or a service provisioning apparatus, the step of further obtaining reachablility of contact methods of the administrator may not be executed.

Specifically, the step of obtaining reachablility of the contact methods of the administrator includes requesting certain apparatuses to query for whether a current contact method is reachable or unreachable, where some apparatuses may provide information about whether the current contact method is reachable.

For example, the content screening apparatus sends information such as a number, an IMSI, or an ESN of the administrator to a home location register (HLR) or a home subscriber server (HSS) to query for whether a mobile phone of the administrator is power-on. When the mobile phone of the administrator is power-on, the content screening apparatus may seek an opinion from the administrator by using contact methods such as the SMS or the multimedia message service (MMS).

For another example, the content screening apparatus queries a Presence Server for the current state of a service. If the state of the IM service of the administrator is "On", the content screening apparatus may use the IM contact method to send a message for seeking an opinion. If the state of the IM service of the administrator is "Off", it indicates that the content screening apparatus cannot use the IM contact method to send a message for seeking an opinion.

For another example, the content screening apparatus may further obtain presence information set by a user, such as "Busy", "Away", or "Hidden". The presence information may reflect reachablility of a contact method of the user. A contact method in the "Away" state is unreachable. A contact method in the "Hidden" or "Busy" state is reachable but not the optimal contact method.

Specifically, one or more contact methods may be obtained in step 503 (step 503 is the same as step 403). In step 504, the content screening apparatus may selectively obtain reachablility of one or more contact methods for one or more times or unselectively obtain reachablility of all contact methods for one or more times. A selective case is as follows: The content screening apparatus queries for whether the user has powered on a mobile phone and whether the SMS is reachable. If the SMS is unreachable, the content screening apparatus queries for whether the IM service of the user is activated. Another selective case is as follows: The content screening apparatus queries for, at the same time, whether the user has powered on a mobile phone and whether the IM service of the user is activated. An unselective case is as follows: The content screening apparatus queries for reachablility of all contact methods of the user once, or queries for reachablility of all contact methods on different servers for several times or queries for reachablility of different contact methods on different servers for several times.

Step 505: The content screening apparatus sends, according to the obtained contact method information of the administrator and reachablility of the contact methods, a message for seeking an opinion, to the administrator. Specifically, the content screening apparatus sends, according to a reachable contact method of the administrator, a message for seeking an opinion, to the administrator, or sends, according to a reachablility-preference principle and a contact method of the administrator, a message for seeking an opinion, to the administrator. The reachablility-preference principle means that if no contact method is reachable, the content screening apparatus may send, according to unreachable contact methods, a message for seeking an opinion, and wait for a feedback after a contact method is reachable later. Actually, the content screening apparatus may determine an action according to its rules and/or a Screening Rule of a content receiver. For example, the content screening apparatus blocks the content to complete screening, or obtains reachablility of contact methods later, and seeks an opinion from the administrator when a contact method is reachable.

The content screening apparatus can selectively use one or more contact methods of the administrator for one or more times or unselectively use all contact methods for one or more times to send a message for seeking an opinion, to the administrator.

For example, when the administrator has more than one contact method, the content screening apparatus can select one or more contact methods from multiple contact methods of the administrator according to a simplicity-preference principle. The simplicity-preference principle indicates preferential selection of a contact method through which a user feedback can be obtained fastest or relatively faster. "Obtaining fastest or relatively faster" can be determined according to specific implementation and experience. For example, according to popularity of mobile phones and SMS usage habits, it is determined that the SMS is a contact method faster than the IM notification, and that the SMS is a relatively fastest contact method.

Contact methods are selected according to simplicity-preference and reachablility. The general principle is first reachablility and then simplicity. Specific operations are flexible. The content screening apparatus may select the simplest contact method among multiple obtained contact methods to obtain reachablility information. If the simplest contact method is unreachable, the content screening apparatus selects the relatively simplest contact method among remaining multiple contact methods to obtain reachablility information. The content screening apparatus may further obtain reachablility information, and then select a contact method according to the simplicity-preference principle.

For example, in consideration of a user's feeling and validity of opinion seeking, the content screening apparatus should select, according to the obtained reachablility information of contact methods, a method through which a user feedback can be rapidly obtained to seek an opinion from the administrator. In the case of failure, the content screening apparatus should select another reachable contact method to seek an opinion.
Steps 506-508 are the same as steps 404-407 and are not described here.

In embodiments of the present invention shown in FIG 4 and FIG. 5, a content screening apparatus seeks an opinion from an administrator and screens content according to the opinion. The content screening apparatus is equipped with the function of seeking an opinion from an administrator. A content source is not required to participate in seeking an opinion. This method can be widely and flexibly used in multiple content screening modes. For example, this method can be used not only in the callable mode but also in the proxy mode. Featuring clear division of roles and responsibilities, this method helps to manage the range of information that can be obtained. For example, an administrator and contact method information of the administrator are obtained (especially when the administrator is a service subscriber), and in the process of seeking an opinion, related information can be provided as a feedback basis (such as a category, or a conflict with a Screening Rule) for the administrator. Information privacy management does not involve the provisioning of information to a third party. Therefore, the security is high.

In the specific embodiment of the present invention shown in FIG. 5, reachablility of contact methods is further obtained, and an opinion is sought according to reachable contact methods. Therefore, the user's feeling and validity of opinion seeking are considered, and the overall efficiency of content screening is further improved. In a specific example of selecting a contact method according to a simplicity-preference principle, a contact method is selected according to the simplicity-preference principle, which enhances the validity of opinion seeking, improves the processing speed, and further saves resources of a content screening system.

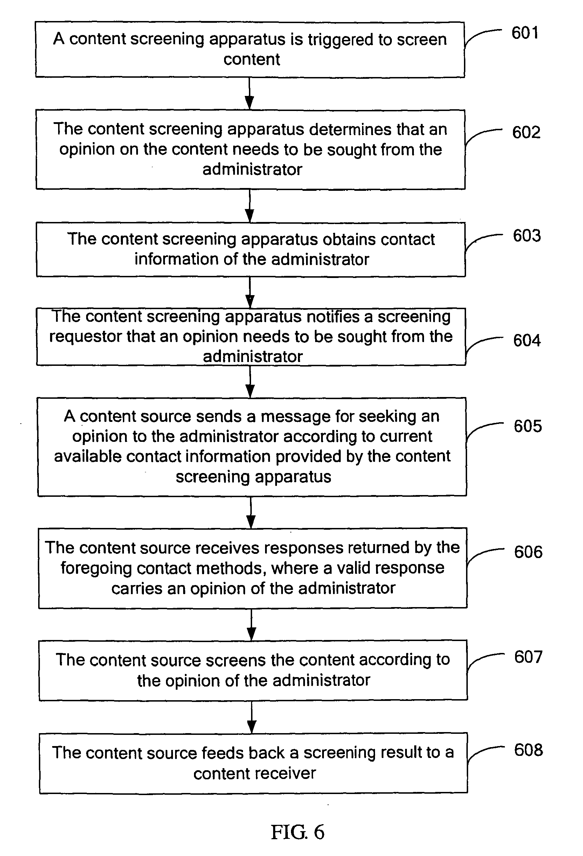

FIG. 6 shows a flowchart of a content screening method according to another specific embodiment of the present invention. Different from the foregoing embodiments of the present invention, in this specific embodiment, a content source rather than a content screening apparatus seeks an opinion from an administrator.
Step 601: A content screening apparatus is triggered to screen content.

Specifically, the content screening apparatus receives a content screening request from a content source.
Step 602: The content screening apparatus determines that an opinion on the content needs to be sought from an administrator.

Specifically, the step is the same as step 402 and is not described here.
Steps 603-604: The content screening apparatus notifies the content source to seek an opinion from the administrator and obtain contact method information of the administrator. In other embodiments of the present invention, reachablility of contact methods of the administrator can be further obtained.

For example, a method according to an embodiment of the present invention may include: by a content screening apparatus, obtaining contact method information of an administrator, notifying a content source that an opinion needs to be sought from the administrator, and feeding back the contact method information of the administrator and information to be provided for the administrator, to the content source; and by the content source, obtaining or not obtaining reachablility of the contact methods, where the information to be provided for the administrator includes a category or a cause of sending the request (for example, a conflict with a specified Screening Rule).

For another example, a method according to an embodiment of the present invention may include: by a content screening apparatus, obtaining a contact method of an administrator and reachablility of the contact method, notifying a content source that an opinion needs to be sought from the administrator, and feeding back the contact method of the administrator, reachablility of the contact method, and information to be provided for the administrator, to the content source.

For another example, a method according to an embodiment of the present invention may include: by a content screening apparatus, notifying a content source that an opinion needs to be sought from an administrator; by the content source, obtaining a contact method of the administrator, or a contact method of the administrator and reachablility of the contact method; by the content screening apparatus, notifying a screening requestor to seek an opinion from the administrator and feeding back information to be provided for the administrator.

In different application scenarios, the foregoing methods in different examples may be selected. For example, if the administrator is a service subscriber, according to the reachablility requirement for service subscription information, a problem may occur when the service subscription information is obtained by apparatuses other than a content screening apparatus. In this case, the content screening apparatus may obtain contact method information of the administrator.

Step 605: The content source sends, according to the contact method information, a message for seeking an opinion to the administrator. Specifically, referring to steps 603 and 604, the contact methods may be current reachable contact methods provided by the content screening apparatus or obtained by the content source.

Specifically, this step is similar to step 404, and the only difference is that the step is executed by a screening requestor other than a content screening apparatus.

Step 606: The content source receives responses returned through the foregoing contact methods. A valid response carries an opinion of the administrator.

Step 607: The content source screens the content according to the opinion of the administrator and sends the content obtained after screening to the content screening apparatus.

For example, if the opinion of the administrator is to permit the content to pass, the content source permits the content to pass; if the opinion of the administrator is to add warning information, the content source adds warning information; if the opinion of the administrator is to block the content, the content screening apparatus blocks the content. If the content source receives multiple responses or messages, and opinions carried in the responses or messages are different, the content source performs processing according to a certain processing policy. For example, the content source blocks the content if an opinion indicates blocking; or seeks an opinion from the administrator again.
Step 608: The content source feeds back a screening result to a next hop (namely, a content receiver, for example, a user) of a transmission link.

In steps 606-607, if no valid feedback is obtained from the administrator, the content source executes actions according to its own rule. For example, the content source blocks the content directly, and returns a response to the administrator to indicate that the content is blocked because no valid feedback is obtained from the administrator.

In the content screening method shown in FIG. 6, the screening requestor is required to participate in seeking an opinion from the administrator. Therefore, this method is applicable to a callable mode in which a content screening apparatus audits content according to a Screening Rule and a content source screens content. This method fully accords with the callable mode in which a screening requestor determines a role for sending data. Compared with methods shown in FIG. 4 and FIG. 5, this method is more applicable to the callable mode. This method really unifies the seeking action and the screening action in the callable mode. In addition, this method can also achieve a beneficial effect of the methods shown in FIG 4 and FIG 5. Reachablility of contact methods is further obtained, and an opinion is sought according to reachable contact methods. Therefore, a user's feeling and validity of opinion seeking are fully considered to improve the overall efficiency of content screening. In a specific example of selecting a contact method according to a simplicity-preference principle, a contact method is selected according to the simplicity-preference principle, which enhances validity of content seeking, improves the processing speed, and further saves resources of a content screening system.

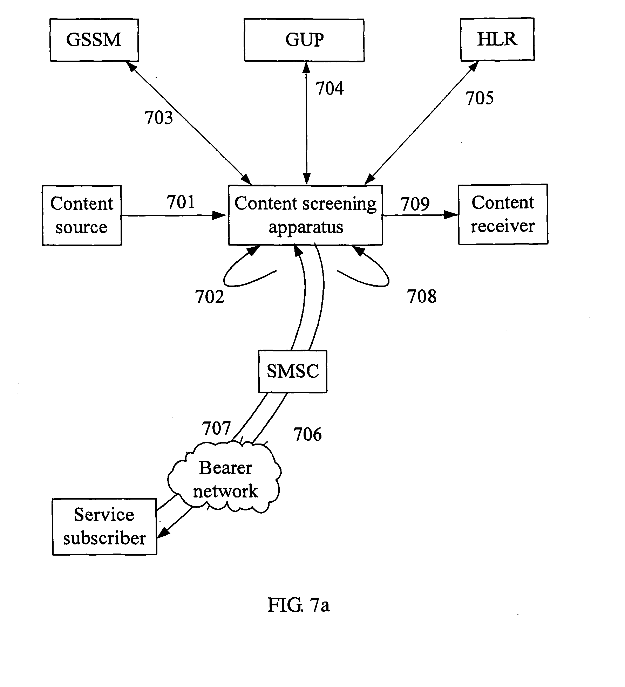

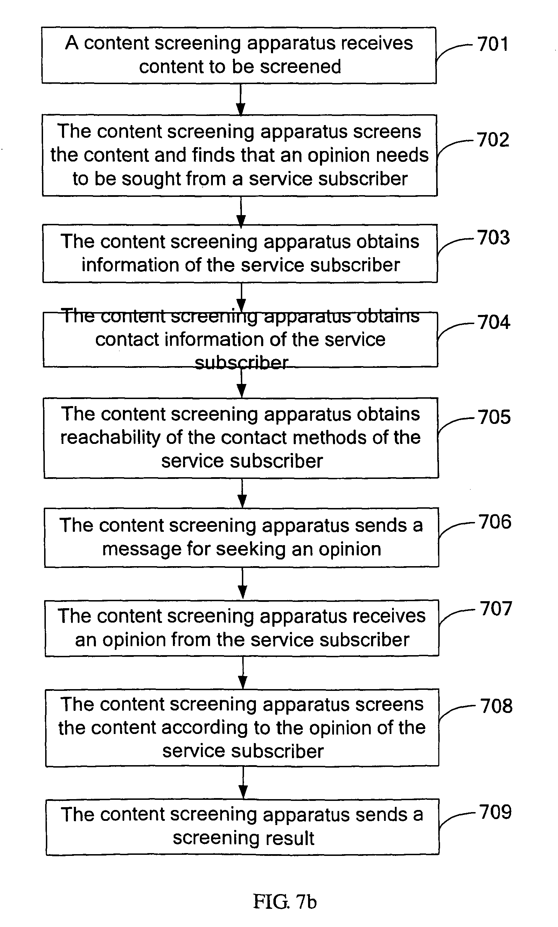

FIG. 7a shows an application scenario of content screening by using a content screening apparatus in the proxy mode. FIG 7b shows a flowchart of a content screening method in the application scenario. In this solution, a content screening apparatus consults an administrator (a service subscriber is taken as an example).
Step 701: The content screening apparatus receives content to be screened.

Specifically, the content screening apparatus may intercept content to be screened or another interception apparatus sends intercepted content to be screened to the content screening apparatus. The content to be screened may be sent from a content source to a user or uploaded from a user to a content source.
Step 702: The content screening apparatus screens the content and finds that an opinion needs to be sought from a service subscriber according to a content Screening Rule of the user.
Steps 703-704: The content screening apparatus obtains service subscription information of the user from a GSSM that stores subscription information. The content screening apparatus obtains contact method information of the service subscriber from a GUP that stores user information. The contact method information includes a mobile phone number.

For example, the GSSM does not support user information storage or does not support further requesting of contact method information from an apparatus that stores user information and return of the contact method information to a caller. The GSSM may return a code, for example, a name. The GSSM needs to further obtain, from a GUP, a CUP, or a BOSS that stores contact method information, contact method information of the service subscriber with the name.

For another example, the GSSM includes a GUP or the GSSM can obtain contact method information. Steps 703 to 704 may be as follows: The content screening apparatus requests, from the GSSM, information about the service subscriber and contact method information of the service subscriber. The contact method of the service subscriber includes a mobile phone number.
Step 705: The content screening apparatus obtains, from an HLR, reachablility of the mobile phone number in the contact methods of the service subscriber. For example, the reachablility information may be whether a mobile phone is powered on and whether the mobile phone can receive short messages.
Step 706: After knowing that the mobile phone is powered on and can receive short messages, the content screening apparatus sends a short message for seeking an opinion, to the service subscriber.

The content screening apparatus may provide information for the service subscriber to perform judgment. The information includes user information, requested content information, a category, time, and a cause of sending the request (e.g., a specific conflict with a set Screening Rule). Specifically, the content screening apparatus may send a short message to the service subscriber through an SMSC. The short message reaches the subscriber through a bearer network.
Step 707: The content screening apparatus receives a feedback from the service subscriber.
Step 708: The content screening apparatus executes an action according to the feedback of the service subscriber, such as pass, block, pass with warning, or pass with modification.
Step 709: The content screening apparatus sends a screening result to a next hop (for example, a user) of a transmission link.

For example, the content screening apparatus may send original content to the user directly, send, according to the user setting, a blocking indication to the user, add related warning information when sending original content, or modify some of the content and then send the content retained after modification to the user.

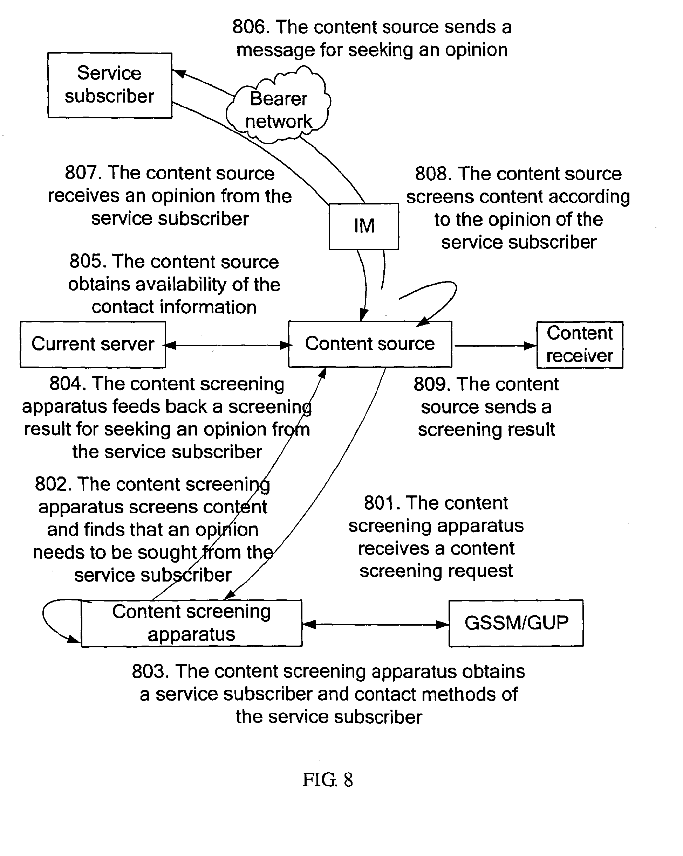

FIG. 8 shows an application scenario of content screening by using a content screening apparatus in the callable mode. In this solution, a content source consults an administrator (a service subscriber is taken as an example).
Step 801: The content screening apparatus receives a content screening request from a content source.

The content screening request may carry user information, content information to be screened, and other related information. The content information to be screened may be the content itself or a content reference. Other related information may be pre-categorization information corresponding to the content.
Step 802: The content screening apparatus screens the content and determines (or finds) that an opinion, about whether the content needs screening, needs to be sought from a service subscriber.

Specifically, a Screening Rule may be set to screen the content by category, but the content screening apparatus cannot obtain category information of the content. According to an internal workflow, the content screening apparatus determines that an opinion, about whether the content needs screening, needs to be sought from the service subscriber.
Step 803: The content screening apparatus obtains, from a device (such as a GSSM or a GUP) that stores subscription information and user profile information, information about a service subscriber corresponding to the user and contact methods of the service subscriber.
Step 804: The content screening apparatus sends feedback information to the content source, where the feedback information includes notifying the content source that an opinion needs to be sought from the subscriber and that the content to be processed needs to be determined according to the opinion. The feedback information may further include one or more types of the following information: contact methods of the service subscriber, a category serving as a judgment basis, and a cause of sending the request (e.g., a specific conflict with a set Screening Rule).
Step 805: According to the obtained contact method information, the content source obtains reachablility of the contact methods from a presence server.
Step 806: According to the reachablility of the contact methods, the content source sends, through an IM, a message for seeking an opinion, to the service subscriber. The content screening apparatus may further provide information for the service subscriber to perform judgment. For example, when user A requests to watch a movie of a website, screening fails due to unavailability of the category of the movie, whether to permit user A to watch the movie, the information may further includes introduction to the movie, and a credit level of the website.
Step 807: The content source receives an opinion fed back from the service subscriber.
Step 808: The content source executes an action according to the opinion of the service subscriber, such as pass, block, pass with warning, or pass with modification.
Step 809: The content source sends a result to a next hop, namely, a content receiver (for example, the user), of a transmission link.

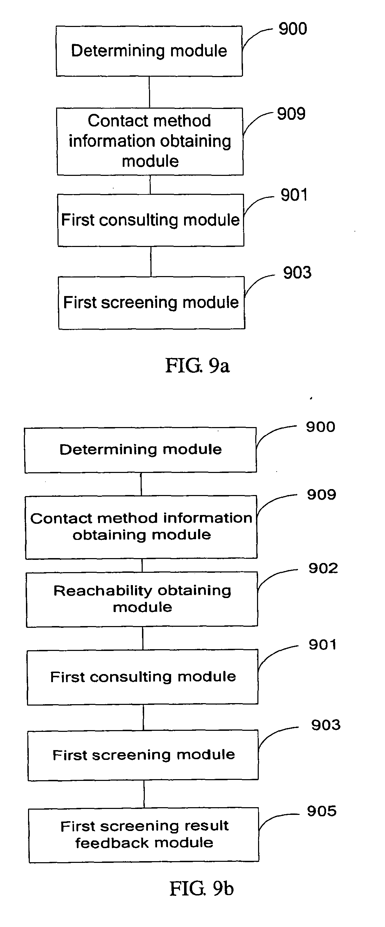

FIG 9a is a schematic diagram showing a structure of a content screening apparatus. The content screening apparatus may work in the callable mode or in the proxy mode, and can execute the content screening method shown in FIG. 1 or FIG. 4. The content screening apparatus includes a determining module 900, a contact method information obtaining module 909, a first consulting module 901, and a first screening module 903.

The determining module 900 is configured to determine whether to seek an opinion from an administrator when the content screening apparatus is triggered to screen content, and trigger the first consulting module 901 if an opinion needs to be sought from the administrator. Specifically, the step of being triggered to screen content includes: by the content screening apparatus, receiving a content screening request from a content source (in the callable mode or in the proxy mode) or intercepting interactive data to be screened (in the proxy mode). Specifically, whether to seek an opinion from the administrator may be determined according to a Screening Rule or a processing method of the content screening apparatus. For details about the Screening Rule or the processing method of the content screening apparatus, reference can be made to step 402.

The first consulting module 901 is configured to: seek an opinion from the administrator when the determining module 900 determines that an opinion needs to be sought from the administrator, and receive a message which is sent by the administrator and carries an opinion of the administrator.

The first screening module 903 is configured to: screen the content according to the received opinion of the administrator, and if the opinion of the administrator is not received, screen the content according to a rule (or referred to as processing capability) of the content screening apparatus and/or a Screening Rule of a content receiver (such as a user).

The contact method information obtaining module 909 is configured to obtain contact method information of the administrator. Specifically, the contact method information obtaining module 909 may parse out contact method information of the administrator that is contained in a Screening Rule, or request from another device contact method information of the administrator and receive the contact method information of the administrator that is returned by the device, so that the first consulting module 901 seeks an opinion from the administrator according to the contact methods of the administrator.

For example, the first consulting module 901 specifically includes:
a selecting submodule, configured to select a contact method of an administrator according to a simplicity-preference principle; and
a consulting submodule, configured to seek an opinion from the administrator according to the selected contact method of the administrator and receive a message which is sent by the administrator and carries an opinion of the administrator.

The simplicity-preference principle indicates preferential selection of a contact method through which a user feedback can be obtained fastest or relatively faster. "Obtaining fastest or relatively faster" can be determined according to specific implementation and experience. For example, according to popularity of mobile phones and SMS usage habits, it is determined that the SMS is a contact method faster than the IM notification, and that the SMS is a relatively fastest contact method.

When the administrator is a service subscriber, contact method information of the service subscriber may be obtained in multiple ways. For details, see step 403.

The first consulting module 901 of the content screening apparatus shown in FIG. 9a seeks an opinion from an administrator, and receives a message which is sent by the administrator and carries an opinion of the administrator; and the first screening module 903 is configured to screen the content according to the opinion of the administrator. Because the content screening apparatus is equipped with the function of seeking an opinion from an administrator, a content source is not required to participate in seeking an opinion. This method can be widely and flexibly used in multiple content screening modes. For example, this method can be used not only in the callable mode but also in the proxy mode. Featuring clear division of roles and responsibilities, this method helps to manage the range of information that can be obtained. For example, an administrator and contact method information of the administrator are obtained (especially when the administrator is a service subscriber), and in the process of seeking an opinion, related information can be provided as a feedback basis (such as a category, or a conflict with a Screening Rule) for the administrator. Information privacy management does not involve the provisioning of information to a third party. Therefore, the security is high.

FIG 9b is a schematic diagram showing a structure of another content screening apparatus. Besides various modules shown in FIG. 9a, the content screening apparatus further includes: a reachablility obtaining module 902, configured to obtain reachablility of the contact methods obtained by the contact method information obtaining module 909. The reachablility information may be information indicating whether a current contact method is reachable or unreachable, for example, whether the administrator has powered on or powered off a mobile phone, or indicating a current state of a service, such as "On" or "Off". "On" or "Off" corresponds to "reachablility" or "unreachablility" of a contact method of the service. The service state may be further described by "Busy", "Away", or "Hidden".

In this content screening apparatus shown in FIG. 9b, the first consulting module 901 may send, according to a reachable contact method of the administrator, a message for seeking an opinion to an administrator, or seek, according to a reachablility-preference principle, an opinion from the administrator and contact methods of the administrator.

For example, the content screening apparatus further includes: a selecting submodule, configured to select, according to a simplicity-preference principle, a contact method of an administrator, so that the first consulting module 901 seeks, according to the selected contact method of the administrator, an opinion from the administrator, and receives a message which is sent by the administrator and carries an opinion of the administrator. Specifically, the selecting submodule may further be configured to select a reachable contact method of the administrator according to a simplicity-preference principle, so that the first consulting module 901 sends, according to the selected reachable contact method of the administrator, a message for seeking an opinion, to the administrator.

The simplicity-preference principle indicates preferential selection of a contact method through which a user feedback can be obtained fastest or relatively faster. "Obtaining fastest or relatively faster" can be determined according to specific implementation and experience. For example, according to popularity of mobile phones and SMS usage habits, it is determined that the SMS is a contact method faster than the IM notification, and that the SMS is a relatively fastest contact method.

The content screening apparatus shown in FIG. 9b may bring the following effects in addition to the beneficial effects of the content screening apparatus shown in FIG. 9a by obtaining reachablility of contact methods and selecting a contact method according to a simplicity-preference principle: It can shorten the opinion seeking time, save system resources, and improve the content screening efficiency.

In another embodiment of the present invention, the content screening apparatus shown in FIG. 9b further includes: a first screening result feedback module 905, configured to feed back a screening result of the screening module 903.

When the content screening apparatus works in the callable mode, the screening result feedback module 905 feeds back a screening result to a content source. The screening result may be a content processing policy. According to the policy, the content source performs further processing, and then returns a processing result to a content receiver. The screening result may be a processing result of the content screening apparatus that can be sent to a content receiver. The content source needs to send only the result to the content receiver.

When the content screening apparatus works in the proxy mode, the screening result feedback module 905 sends data obtained after screening to a content receiver.

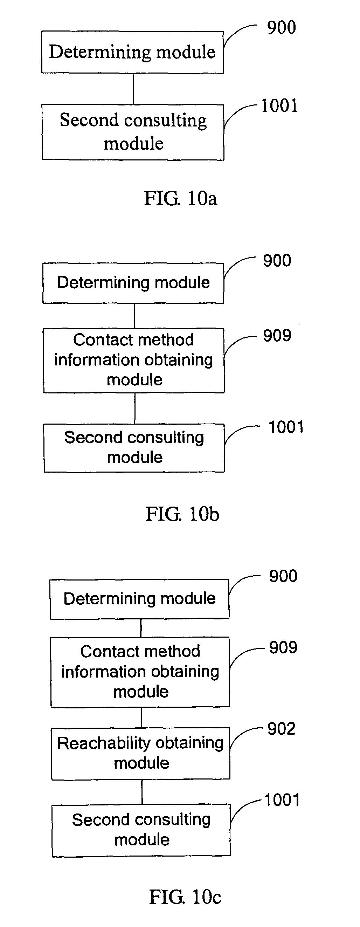

FIG. 10a is a schematic diagram showing a structure of a content screening apparatus. The content screening apparatus works with a content source to execute the content screening methods shown in FIG. 1 and FIG. 6. The content screening apparatus includes a determining module 900 and a second consulting module 1001.

The determining module 900 is configured to: determine whether to seek an opinion from an administrator when the content screening apparatus is triggered to screen content, and trigger the second consulting module 1001 if an opinion needs to be sought from the administrator. The structure and functions of the determining module 900 are similar to the structure and functions of the determining module 900 shown in FIG 9a. For details, see the foregoing descriptions. Specifically, the step of being triggered to screen content includes: by the content screening apparatus, receiving a content screening request from a content source (or referred to as a content screening requestor) in the callable mode. The second consulting module 1001 is configured to: send to the content source, a message for seeking an opinion from the administrator, when the determining module 900 determines that an opinion needs to be sought from the administrator.

Specifically, the message sent to the content source and intended for seeking an opinion from the administrator may carry a required judgment basis sent to the content source, such as a category and a cause of sending the request (for example, a specific conflict with a set Screening Rule).

The content screening apparatus shown in FIG. 10a works in the callable mode. The content screening apparatus can automatically determine that an opinion needs to be sought from an administrator and can trigger a content source to seek an opinion from the administrator. With this content screening apparatus, content can be flexibly screened on the network side according to an opinion of an administrator to meet the user's requirement for personalized screening of the content on the network side.

FIG. 10b is a schematic diagram showing a structure of another content screening apparatus. Besides the modules shown in FIG. 10a, the content screening apparatus further includes a contact method information obtaining module 909. Being the same as the counterpart shown in FIG. 9b, the contact method information obtaining module 909 is configured to obtain contact method information of the administrator. Specifically, the contact method information obtaining module 909 may parse out contact method information of the administrator that is contained in a Screening Rule or request contact method information of the administrator from another device and receive the contact method information of the administrator returned by the device. A second consulting module 1001 shown in FIG 10b is further configured to send the contact method information of the administrator obtained by the contact method information obtaining module 909 to a content source when sending a message for seeking an opinion from the administrator to the content source.

Besides having beneficial effects of the content screening apparatus shown in FIG. 10a, the content screening apparatus shown in FIG 10b further obtains contact method information of the administrator, so that an opinion can be sought from the administrator more easily and quickly.

FIG 10c is a schematic diagram showing a structure of another content screening apparatus. Besides the modules shown in FIG. 10a or FIG. 10b, the content screening apparatus further includes a reachablility obtaining module 902. Being the same as the counterpart shown in FIG. 9c, the reachablility obtaining module 902 is configured to obtain reachablility of contact methods of an administrator. The contact method information of the administrator may be obtained by the contact method information obtaining module 909, received from a content source, or stored by the reachablility obtaining module 902. The reachablility information may indicate whether a current contact method is reachable or unreachable, for example, whether the administrator has powered on or powered off a mobile phone, or indicate a current state of a service, such as "On" or "Off". "On" or "Off" corresponds to "reachablility" or "unreachablility" of a contact method of the service. The service state may be further described by "Busy", "Away", or "Hidden".

A second consulting module 1001 shown in FIG. 10c is further configured to send the reachablility of contact methods, which is obtained by the reachablility obtaining module 902, to a content source when sending, to the content source, a message for seeking an opinion from the administrator, so that the content source can seek an opinion according to a reachable contact method or seek an opinion from the administrator according to a reachablility-preference principle and contact methods of the administrator. Specifically, the content source can select a contact method according to a simplicity-preference principle and seek an opinion from the administrator according to the selected contact method.

Besides having the beneficial effects of the content screening apparatuses shown in FIG. 10a and FIG. 10b, the content screening apparatus shown in FIG. 10c further obtains reachablility of contact methods and sends the reachablility to a content source, so that the content source selects a contact method according to a simplicity-preference principle. Therefore, it can shorten the opinion seeking time, save system resources, and improve the content screening efficiency.

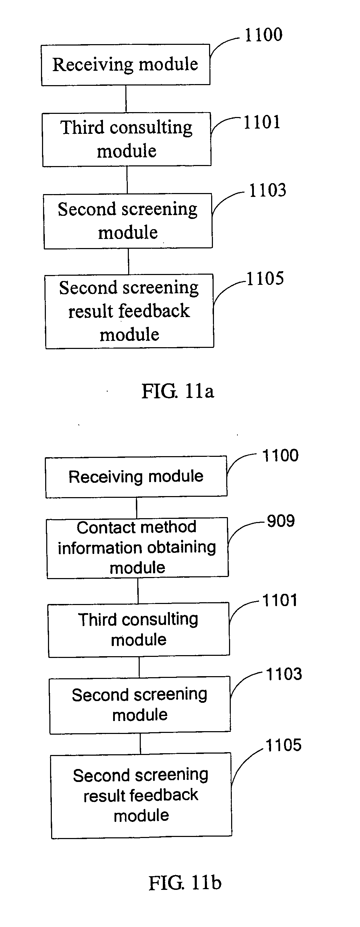

FIG 11a is a schematic diagram showing a structure of a content source. The content source can cooperate with the content screening apparatuses shown in FIG. 10a, FIG. 10b, and FIG 10c to implement the content screening methods shown in FIG. 1 and FIG 6.

The content source includes a receiving module 1100, configured to receive a message sent by the content screening apparatus, where the message is intended for seeking an opinion from an administrator; a third consulting module 1101, configured to seek an opinion from the administrator and receive a message which is sent by the administrator and carries an opinion of the administrator; a second screening module 1103, configured to screen content according to the received opinion of the administrator, and if the opinion of the administrator is not received, screen content according to a rule of the content source and/or a Screening Rule of a content receiver (such as a user); and a second screening result feedback module 1105, configured to feed back the screening result. Specifically, the second screening result feedback module 1105 is configured to feed back the screening result to a next hop (namely, a content receiver) of a transmission link.

The content source shown in FIG. 11a can cooperate with the content screening apparatus shown in FIG. 10a to seek an opinion from an administrator according to a requirement. With this content source, content can be flexibly screened on the network side according to an opinion of an administrator to meet the user's requirement for personalized screening of the content on the network side. The content source shown in FIG. 11a can further cooperate with the content screening apparatuses shown in FIG. 10b and FIG. 10c to simplify operations and improve the content screening efficiency.

FIG. 11b shows a structure of a content source. Besides the modules shown in FIG. 11a, the content source further includes a contact method information obtaining module 909. Similar to the counterpart shown in FIG. 9b, the contact method information obtaining module 909 is configured to obtain contact method information of the administrator. Specifically, the contact method information obtaining module 909 may parse out contact method information of the administrator that is contained in a Screening Rule or request contact method information of the administrator from another device and receive the contact method information of the administrator returned by the device. Alternatively, the content source does not include the contact method information obtaining module 909, but the receiving module 1100 further receives contact method information which is about the administrator and is sent from a content screening apparatus.

Specifically, a third consulting module 1101 shown in FIG. 11b is configured to seek, according to obtained contact method information of the administrator, an opinion from an administrator.

The content source shown in FIG. 11b can cooperate with the content screening apparatus shown in FIG 10a or FIG. 10c, so that a device on the network side can seek an opinion from an administrator and opinion seeking is more convenient.

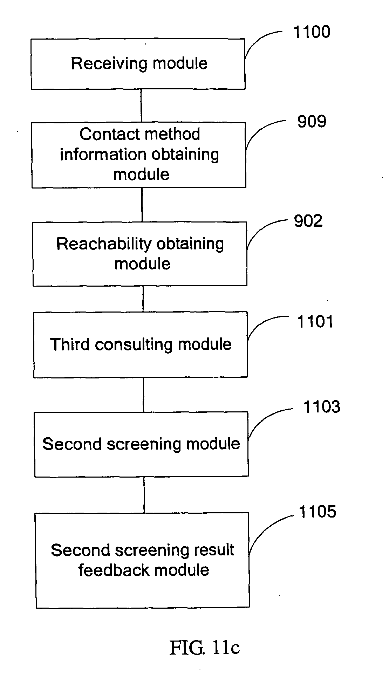

FIG 11c is a schematic diagram showing a structure of another content source. Besides the modules shown in FIG. 11a or FIG. 11b, the content source further includes a reachablility obtaining module 902. Similar to the counterpart shown in FIG 9c, the reachablility obtaining module 902 is configured to obtain reachablility of contact methods of an administrator. The contact method information of the administrator may be obtained by a contact method information obtaining module 909, received by a receiving module from a content screening apparatus, or stored by the reachablility obtaining module 902. Alternatively, the content source does not include the reachablility obtaining module 902, but a receiving module 1100 further receives reachablility of contact methods of the administrator which is sent by a content screening apparatus.

The reachablility information may indicate whether a current contact method is reachable or unreachable, for example, whether the administrator has powered on or powered off a mobile phone, or indicate a current state of a service, such as "On" or "Off". "On" or "Off' corresponds to "reachablility" or "unreachablility" of a contact method of the service. The service state may be further described by "Busy", "Away", or "Hidden".

A third consulting module 1101 shown in FIG. 11c can seek an opinion according to a reachable contact method or seek an opinion from an administrator according to a reachablility principle and a contact method of the administrator.

For example, the content screening apparatus further includes: a selecting submodule, configured to select a contact method of an administrator according to a simplicity-preference principle, so that the third consulting module 1101 seeks an opinion from the administrator according to the selected contact method of the administrator and receives a message which is sent by the administrator and carries an opinion of the administrator. Specifically, the selecting submodule can be further configured to select a reachable contact method of an administrator according to a simplicity-preference principle, so that the first consulting module 1101 sends a message for seeking an opinion to the administrator according to the selected reachable contact method of the administrator.

The simplicity-preference principle indicates preferential selection of a contact method through which a user feedback can be obtained fastest or relatively faster. "Obtaining fastest or relatively faster" can be determined according to specific implementation and experience. For example, according to popularity of mobile phones and SMS usage habits, it is determined that the SMS is a contact method faster than the IM notification, and that the SMS is a relatively fastest contact method.

The content source shown in FIG. 11c can cooperate with the content screening apparatus shown in FIG. 10a or FIG 10b, so that a device on the network side can seek an opinion from an administrator and that opinion seeking becomes more convenient by obtaining contact method information of the administrator. In addition, by obtaining and using reachablility of contact methods, the validity of opinion seeking is improved, and the overall content screening efficiency is improved.

In the foregoing embodiments of the present invention, the administrator, the message sent to the administrator for seeking an opinion, and the obtaining of contact method information and reachablility of the contact methods can be adjusted and changed according to actual conditions. For details, see specific examples in the embodiment shown in FIG. 4.

The foregoing apparatus embodiments are exemplary only. A unit which is described as a separate component may or may not be physically separate. A component illustrated as a unit may or may not be a physical unit. That is, the component may be located in a place or be distributed in multiple network elements. According to the actual requirements, certain or all modules can be selected to achieve the objective of the solution of the embodiments of the present invention. Those skilled in the art may understand and implement the solution without any creative effort.

Through the foregoing embodiments, it is understandable to those skilled in the art that the embodiments of the present invention may be implemented by software and a necessary general hardware platform or by hardware only. Based on such understandings, the foregoing technical solution or contributions to the prior art can be embodied by a software product. The software product may be stored in a storage medium such as a read only memory (ROM) or random access memory (RAM), a magnetic disk, or a compact disk-read only memory (CD-ROM), and incorporate several instructions to instruct a computer device, for example, a personal computer, a server, or a network device, to execute the method provided by each embodiment or certain parts of an embodiment of the present invention.

The foregoing embodiments do not constitute any limitation to the invention. Any modification, equivalent substitution, and improvement without departing from the spirit and principle of the invention should be covered in the scope of protection of the invention.

## Claims

1. A content screening method, comprising:
determining that an opinion on content needs to be sought from an administrator according to a Screening Rule or a processing mode of a content screening apparatus;
obtaining contact method information of the administrator;
sending a message for seeking the opinion to the administrator according to the contact method information of the administrator, wherein the opinion is about how to screen the content;
receiving a message which is sent by the administrator and carries the opinion of the administrator; and
screening the content according to the opinion of the administrator.

2. The method according to claim 1, wherein:
after obtaining the contact method information of the administrator, the method further comprises:
obtaining reachablility of the contact method of the administrator, wherein the reachablility indicates whether the contact method is reachable or unreachable;
the step of sending the message for seeking the opinion according to the contact method information of the administrator comprises:
sending the message for seeking the opinion to the administrator according to a reachable contact method of the administrator; or
sending the message for seeking the opinion to the administrator according to a reachablility principle and the contact method information of the administrator.

3. The method according to claim 1 or 2, wherein:
when there are multiple contact methods, the method further comprises:
selecting a contact method from the multiple contact methods of the administrator according to a simplicity principle;
the step of sending the message for seeking the opinion to the administrator according to the contact method information of the administrator comprises:
sending the message for seeking the opinion to the administrator according to the selected contact method.

4. The method according to claim 1 or 2, wherein:
the administrator is a service subscriber; and the step of obtaining the contact method information of the administrator comprises:
requesting the contact method information of the service subscriber from a system that stores subscription information and receiving the contact method information of the service subscriber; or
requesting information of the service subscriber from a system that stores subscription information and receiving the information of the service subscriber, wherein the information of the service subscriber comprises the contact method of the service subscriber; or
requesting information of the service subscriber from a system that stores subscription information, further requesting the contact method information of the service subscriber from an apparatus that stores the contact method information of the service subscriber according to the received information of the service subscriber, and receiving the contact method information of the service subscriber.

5. The method according to claim 1 or 2, wherein:
the step of determining that the opinion on content needs to be sought from the administrator according to the Screening Rule or the processing mode of the content screening apparatus comprises:
determining, by the content screening apparatus, that the opinion on the content needs to be sought from the administrator according to a Screening Rule specified by a content receiver or the processing mode of the content screening apparatus;
the step of sending the message for seeking the opinion to the administrator comprises:
sending, by the content screening apparatus, the message for seeking the opinion to the administrator; or
notifying, by the content screening apparatus, the content source that the opinion needs to be sought from the administrator; and sending, by the content source, the message for seeking the opinion to the administrator.

6. A content screening apparatus working in a callable or a proxy mode, comprising:
a determining module, configured to, when the content screening apparatus is triggered to screen content, determine, according to a Screening Rule or a processing mode of the content screening apparatus, whether to seek an opinion from an administrator, and trigger a first consulting module if the opinion needs to be sought from the administrator;
a contact method information obtaining module, configured to obtain contact method information of the administrator;
the first consulting module, configured to seek the opinion from the administrator according to the contact method information of the administrator when the determining module determines that the opinion needs to be sought from the administrator, and receive a message which is sent by the administrator and carries the opinion of the administrator; and
a first screening module, configured to screen the content according to the received opinion of the administrator.

7. The content screening apparatus according to claim 6, further comprising:
a first screening result feedback module, configured to send a screening result of the first screening module.

8. The content screening apparatus according to claim 6, further comprising a reachablility obtaining module, wherein:
the reachablility obtaining module is configured to obtain reachablility of the contact methods that has been obtained by the contact method information obtaining module, wherein the reachablility indicates the contact method is reachable or unreachable; and
the first consulting module is configured to: seek the opinion from the administrator according to a reachable contact method of the administrator when the determining module determines that the opinion needs to be sought from the administrator, or seek the opinion from the administrator according to a reachablility principle and the contact method of the administrator; and receive the message which is sent by the administrator and carries the opinion of the administrator.

9. The content screening apparatus according to any one of claims 6 to 8, further comprising a selecting submodule, wherein:
the selecting submodule is configured to select a contact method of the administrator according to a simplicity principle; and
the first consulting module is configured to seek the opinion from the administrator according to the selected contact method of the administrator when the determining module determines that the opinion needs to be sought from the administrator, and receive the message which is sent by the administrator and carries the opinion of the administrator.

10. A content screening apparatus working in the callable mode, comprising:
a determining module, configured to: when the content screening apparatus receives a content screening request sent by a content source, determine, according to a Screening Rule or a processing mode of the content screening apparatus, whether to seek an option from an administrator, and trigger a second consulting module if the option needs to be sought from the administrator; and
the second consulting module, configured to send a message for seeking the opinion from the administrator to the content source when the determining module determines that the opinion needs to be sought from the administrator so that the content source seeks the opinion from the administrator and screens content according to the received opinion of the administrator.

11. The content screening apparatus according to claim 10, further comprising a contact method information obtaining module, wherein:
the contact method information obtaining module is configured to obtain the contact method information of the administrator; and
the second consulting module is further configured to send the contact method information of the administrator to the content source.

12. The content screening apparatus according to claim 10 or 11, further comprising a reachablility obtaining module, wherein: the reachablility obtaining module is configured to obtain reachablility of the contact method of the administrator; and the second consulting module is further configured to send the reachablility of the contact method to the content source.

13. A content source communicating with the content screening apparatus that works in the callable mode according to any one of claims 10 to 12, comprising:
a receiving module, configured to receive a message sent by the content screening apparatus, wherein the message indicates that an opinion needs to be sought from an administrator;
a third consulting module, configured to seek the opinion from the administrator and receive a message which is sent by the administrator and carries the opinion of the administrator; and
a second screening module, configured to screen content according to the received opinion of the administrator.

14. The content source according to claim 13, further comprising:
a second screening result feedback module, configured to feed back the screening result to a content receiver.

15. The content source according to claim 13, wherein:
the content source comprises a contact method information obtaining module, which is configured to obtain contact method information of the administrator; or
the receiving module is further configured to receive the contact method of the administrator which is sent by the content screening apparatus; and
the third consulting module is specifically configured to: seek the opinion from the administrator according to the obtained or received contact method information of the administrator, and receive the message which is sent by the administrator and carries the opinion of the administrator.

16. The content source according to claim 15, wherein:
the content source comprises a reachablility obtaining module, configured to obtain reachablility of contact methods of the administrator; or
the receiving module is further configured to receive reachablility of the contact method of the administrator from the content screening apparatus, wherein the reachablility indicates whether the contact method is reachable or unreachable; and
the third consulting module is specifically configured to: seek the opinion from the administrator according to a reachable contact method or seek the opinion from the administrator according to a reachablility principle and the contact method of the administrator; and receive the message which is sent by the administrator and carries the opinion of the administrator.

17. The content source according to claim 15 or 16, further comprising a selecting submodule, wherein:
the selecting submodule is configured to select a contact method of the administrator according to a simplicity principle; and
the third consulting module is configured to seek the opinion from the administrator according to the selected contact method of the administrator; and receive the message which is sent by the administrator and carries the opinion of the administrator.

18. A content screening system, comprising:
a content screening apparatus working in the callable mode, configured to: after receiving a content screening request sent by a content source, determine, according to a Screening Rule or a processing mode of the content screening apparatus, that an opinion needs to be sought from an administrator, send a message for seeking the opinion to the administrator, receive the opinion returned by the administrator, screen content according to the opinion, and send a content screening result to the content source; and
the content source, configured to cooperate with the content screening apparatus in the callable mode, send the content screening request to the content screening apparatus, receive the content screening result sent by the content screening apparatus, perform processing according to the content screening result, and send a processing result to a content receiver;
or
a content screening apparatus working in the proxy mode, configured to: after intercepting content sent from a content source to a content receiver, determine, according to a Screening Rule or a processing mode of the content screening apparatus, that an opinion needs to be sought from an administrator, send a message for seeking the opinion to the administrator, receive the opinion returned by the administrator, screen the content according to the opinion, and send a content screening result to the content receiver; and
the content source, configured to cooperate with the content screening apparatus in the proxy mode and send the content to the content receiver.

19. A content screening system, comprising:
a content screening apparatus working in the callable mode, configured to: after receiving a content screening request sent by a content source, determine, according to a Screening Rule or a processing mode of the content screening apparatus, that an opinion needs to be sought from an administrator, and notify the content source that the opinion needs to be sought from the administrator; and
the content source, configured to obtain the opinion from the administrator, screen content according to the opinion of the administrator, and send the content obtained after processing to a content receiver.
